# EUROPEAN PATENT SPECIFICATION

(11) **EP 1 927 622 B1**
(45) Date of publication and mention of the grant of the patent: **02.09.2009**
(21) Application number: 07022032.2
(22) Date of filing: 13.11.2007
(51) Int. Cl.: C08K 3/34, C08K 7/16, C08K 9/06, C08K 9/10

(54) **Nanocomposite particle and molecular wrapping method**
Nanokompositpartikel und Molekülumhüllungsverfahren
Particule nanocomposite et procédé d'enveloppement moléculaire

(30) Priority: 27.11.2006 JP 2006318725
(43) Date of publication of application: 04.06.2008
(73) Proprietor: KABUSHIKI KAISHA TOYOTA CHUO KENKYUSHO, Aichi-gun, Aichi-ken, 480-1192 (JP); Toyota Jidosha Kabushiki Kaisha, Toyota-shi, Aichi-ken 471-8571 (JP); Kabushiki Kaisha Toyota Jidoshokki, Kariya-shi Aichi-ken 448-8671 (JP)
(72) Inventor: Tani, Masaaki, Nagakute-cho Aichi-gun Aichi-ken, 480-1192 (JP); Fukushima, Yoshiaki, Nagakute-cho Aichi-gun Aichi-ken, 480-1192 (JP); Isobe, Yasumitsu, Toyota-shi Aichi-ken, 471-8571 (JP); Niimi, Tomohiro, Kariya-shi Aichi-ken 448-8671 (JP); Muramatsu, Hisashi, Kariya-shi Aichi-ken 448-8671 (JP); Hiramatsu, Hiroyasu, Kariya-shi Aichi-ken 448-8671 (JP); Shimo, Toshihisa, Kariya-shi Aichi-ken 448-8671 (JP); Kondo, Toshiro, Kariya-shi Aichi-ken 448-8671 (JP)
(74) Representative: Kramer - Barske - Schmidtchen

(56) References cited:
- EP-A- 1 245 627
- WO-A-01/36529
- WO-A-20/05118702
- WO-A-20/07015243
- JP-A- 2006 182 688

## Description

### Technical Field

The present invention relates to a nanocomposite particle comprising a core particle and a shell layer enclosing the core particle, and a molecular wrapping method applicable to production of the same.

### Background Art

Resin moldings and coating films produced by using resin molding raw materials or coating compositions containing materials having specific properties, such as ultraviolet absorbers and pigments, are used in a variety of fields. For example, a coating composition prepared by mixing an ultraviolet absorber in resin varnish suitable for hard coatings is coated on a surface of a substrate and hardened, thereby forming a hard coating layer. The substrate having the hard coating layer thereon is improved in scratch and abrasion resistance. In addition, if the substrate is formed of resin, since the intensity of ultraviolet rays reaching the surface of the substrate is reduced, the substrate is more protected from UV degradation, and if the substrate is transparent, the substrate is provided with ultraviolet absorbing ability. When used for a long time, however, the substrate having the hard coating layer thereon has a problem of ultraviolet absorbing ability degradation because the ultraviolet absorber is released from the hard coating layer or modified under influence of an organic material, such as resin and a polymerization initiator, contained in the hard coating layer, water or the like. Moreover, depending on the kind of ultraviolet absorber, the substrate having the hard coating layer thereon also has a problem of inability to exhibit a desired ultraviolet absorbing effect because the ultraviolet absorber added to the coating composition is not uniformly dispersed in a solvent and aggregates within the hard coating layer.

In this connection, Patent Document 1 proposes a microcapsule having a polyurethane and/or urea wall and containing a triazine ring in the chemical structure of the wall. This microcapsule shows excellent coloring property upon enclosing a diazonium salt or an electron-donating dye precursor. However, since the microcapsule is an organic material in itself, for example, the organic material, especially a remaining group contained in the chemical structure of the wall or a carbamate group contained in polyurethane sometimes reacts with the diazonium salt or the electron-donating dye precursor, thereby modifying the diazonium salt or the electron-donating dye precursor and impairing its coloring property. Moreover, since the microcapsule recited in Patent Document 1 has no functional group which can be covalently bound to another organic group around the wall, even when the microcapsule is held in the resin matrix, the diazonium salt or the electron-donating dye precursor is expected to be released from the matrix together with the microcapsule, depending on service conditions.

Patent Document 2 discloses ultraviolet absorbing group-containing alkoxysilane and ultraviolet absorbing group-containing polyorganosiloxane possessing an alkoxysilyl group. When a coating film is formed of a coating composition containing ultraviolet absorbing group-containing alkoxysilane or ultraviolet absorbing group-containing polyorganosiloxane, since the ultraviolet absorbing group is bonded to a silicon atom, the ultraviolet absorbing group is prevented from being released from the coating film. However, when the coating film contains a substance which reacts with the ultraviolet absorbing group so as to modify the ultraviolet absorbing group, there is no measure to suppress the modification. Moreover, ultraviolet absorbing group-containing alkoxysilane or ultraviolet absorbing group-containing polyorganosiloxane cannot be used in the form of being held in an organic matrix.

Furthermore, Non-Patent Document 1 discloses that water is further added to a solution prepared by dissolving a fluorescent molecule in an organic solvent and adding titanium propoxide, thereby bonding the fluorescent molecule with titania gel and forming a pigment-titania composite in which the fluorescent molecule is wrapped with titania gel. The obtained pigment-titania composite exists as associates in the solution, and octyltrimethoxysilane is added to stabilize the aggregates. Namely, the pigment-titania composite tends to form associates in a solvent. Therefore, even if a coating composition is prepared, for example, by adding the pigment-titania composite in resin varnish, the composite is poorly dispersed in the coating composition. Even if a coating film is formed by using such a coating composition, since the pigment-titania composite exists as aggregates in the coating film, the property of each fluorescent molecule cannot be exhibited satisfactorily.
[Patent Document 1] Japanese Unexamined Patent Publication No.2005-305,872
[Patent Document 2] Japanese Unexamined Patent Publication No.2006-182,688
[Non-Patent Document 1] I. Ichinose, T. Kunitake "New Nanocomposite Synthesis by Molecular Wrapping" Polymer Preprints, Japan, August 28, 2001, Vo1.50, No.11, pp.2714-2715

### Disclosure of the Invention

The present invention has been conceived in view of the above problems. It is an object of the present invention to provide a nanocomposite particle comprising an organic molecule or an assembly of organic molecules and a novel shell layer enclosing the organic molecule, which can maintain and fully exhibit the properties of the organic molecule. It is also an object of the present invention to provide a molecular wrapping method applicable to production of the nanocomposite particle of the present invention.

The nanocomposite particle of the present invention characteristically comprises a core particle being one organic molecule or an assembly of organic molecules, and a shell layer enclosing the core particle and comprising organic titanosilicate which comprises an Si and Ti oxide containing a bond expressed by M-O-M, where M is a silicon or titanium atom and O is an oxygen atom, and has an organic group bonded to at least part of silicon atoms.

A molecular wrapping method of the present invention is a molecular wrapping method for wrapping one organic molecule or an assembly of organic molecules with organic titanosilicate, comprising:
a mixed solution preparing step of preparing a mixed solution by dissolving at least titanium alkoxide, organoalkoxysilane having one or more alkoxy groups and possessing a silicon atom covalently bound to an organic group, and an organic molecule in a dehydrated solvent; and
a wrapping step of wrapping the organic molecule with organic titanosilicate by adding water to the mixed solution to subject titanium alkoxide and organoalkoxysilane to hydrolysis and dehydration-condensation with titanium alkoxide and organoalkoxysilane associating around the organic molecule.

Note that in the mixed solution preparing step, the state in which solutes such as titanium alkoxide, organoalkoxysilane and the organic molecule are dissolved in a dehydrated solvent includes the states that in the mixed solution after the dissolution, at least part of solutes are dissociated into ions, are dispersed in the form of molecules without being dissociated into ions, and exist in the form of associates of molecules.

Advantages of the nanocomposite particle and the wrapping method of the present invention will be described below.

The nanocomposite particle of the present invention comprises a core particle being one organic molecule or an assembly of organic molecules, and a shell layer enclosing the core particle and comprising organic titanosilicate. Because of being enclosed by the shell layer, the organic molecule is shielded from substances causing degradation of the organic molecule and becomes stable. Therefore, when at least part of the organic molecule contains an ultraviolet absorbing molecule having an ultraviolet absorbing effect or a pigment molecule having a coloring property, the ultraviolet absorbing effect or the coloring property is maintained for a long time.

Note that in the nanocomposite particle of the present invention, one organic molecule or an assembly of organic molecules is enclosed by the shell layer comprising organic titanosilicate which comprises an Si and Ti oxide containing a bond expressed by M-O-M, where M is a silicon atom or a titanium atom and O is an oxygen atom, and has an organic group bonded to at least part of silicon atoms. On the other hand, the above Non-Patent Document 1 discloses a pigment-titania composite in which a fluorescent molecule is wrapped with titania gel, but the pigment-titania composite forms associates with each other. Therefore, even if the associates of the pigment-titania composite are stabilized by octyltrimethoxysilane, a layer containing an Si and Ti oxide is formed only around each associates.

Since the shell layer of the nanocomposite particle comprises organic titanosilicate and has an organic group, the nanocomposite particle is excellent in dispersibility in a solvent. Namely, the nanocomposite particle is excellent in dispersibility even in a coating composition containing resin varnish, and so allows formation of a coating film in which the nanocomposite particles are uniformly dispersed in a resin matrix.

When the organic group constituting the shell layer has, at a terminal end thereof, a reaction group which can react and form a bond with an organic group constituting another shell layer, it is possible to form a molding or a coating film formed mainly of a reaction product of the nanocomposite particle. Moreover, a nanocomposite particle-organic polymer composite material formed by using a mixture of the nanocomposite particles and an organic monomer as a raw material is excellent in strength, hardness, gas barrier property and so on.

Furthermore, the molecular wrapping method of the present invention is a molecular wrapping method for wrapping one organic molecule or an assembly of organic molecules with organic titanosilicate. When titanium alkoxide and organoalkoxysilane are mixed with an organic molecule in a dehydrated solvent in the mixed solution preparing step, which will be mentioned in detail later, an alkoxy group of organoalkoxysilane is coordinated with a titanium atom of titanium alkoxide. In addition, since the organic molecule also tends to be coordinated with the titanium atom, titanium alkoxide and organoalkoxysilane associate around the organic molecule. When water is added to the mixed solution in the next wrapping step, titanium alkoxide and organoalkoxysilane undergo hydrolysis and dehydration-condensation around the organic molecule, the organic molecule can be easily enclosed by organic titanosilicate.

In the molecular wrapping method of the present invention, since titanium alkoxide and organoalkoxysilane are dissolved together in a dehydrated solvent in order to wrap the organic molecule, the organic molecule enclosed by organic titanosilicate hardly forms aggregates with each other.

### Brief Description of Drawings

Figure 1A and Figure 1B are graphs showing UV intensity absorbed by samples (UV absorbance of samples) having a coating film containing layered methacryl titanosilicate or UVA wrapping methacryl titanosilicate. Figure 1A shows UV absorbance of a test piece (TP2) having a coating film containing UVA wrapping methacryl titanosilicate, and Figure 1B shows UV absorbance of a test piece (TP1) having a coating film containing layered methacryl titanosilicate.

Figure 2 shows a ^{47,49}Ti NMR spectrum of titanium isopropoxide (the upper side) and a ^{47,49}Ti NMR spectrum of a mixture of titanium isopropoxide and 3-methacryloxypropyltrimethoxysilane (the lower side).

Figure 3 shows a ¹³C CP-MAS NMR spectrum of UVA wrapping methacryl titanosilicate.

Figure 4 shows a ²⁹Si HD-MAS NMR spectrum of UVA wrapping methacryl titanosilicate.

Figure 5 shows a TEM image of UVA wrapping methacryl titanosilicate synthesized as an example.

Figure 6 shows a TEM image of UVA wrapping methacryl titanosilicate obtained by dispersing the UVA wrapping methacryl titanosilicate synthesized as an example in a solvent and drying it.

### Best Mode for Carrying Out the Invention

A best mode for carrying out the nanocomposite particle of the present invention and the molecular wrapping method of the present invention will be described below.

It should be appreciated that the nanocomposite particle of the present invention and the molecular wrapping method of the present invention are not limited to the following embodiments. The nanocomposite particle and the molecular wrapping method of the present invention may be practiced or embodied in other forms to which a variety of changes and modifications are made by those skilled in the art without departing the spirit and scope of the present invention.

### [Nanocomposite Particle]

The nanocomposite particle of the present invention comprises a core particle and a shell layer enclosing the core particle.

The core particle is one organic particle or an assembly of organic molecules. The assembly of organic molecules is preferably constituted by an assembly of 2 to 20 molecules and more preferably an assembly of 2 to 8 molecules. The kind of the organic molecule enclosed by the shell layer is not particularly limited, but it is preferable that at least part of the organic molecule contains an ultraviolet absorbing molecule having an ultraviolet absorbing effect or a pigment molecule having a coloring property. When at least part of the organic molecule is an ultraviolet absorbing molecule or a pigment molecule, the ultraviolet absorbing effect or the coloring property is maintained for a long time by enclosing the core particle by the shell layer. The organic molecule can be not only an ultraviolet absorbing molecule or a pigment molecule but also an organic polymer, a biomolecule, an infrared absorbing molecule, an enzyme, an organometallic complex or the like, and two or more kinds of these can form an assembly. Especially when at least part of the organic molecule contains a polar molecule, a shell layer is easily formed around the organic molecule in producing the nanocomposite particle. When at least part of the organic molecule contains an ultraviolet absorbing molecule, the ultraviolet absorbing molecule is preferably at least one selected from benzophenone series, benzotriazole series, benzoate series and triazine series. When at least part of the organic molecule contains a pigment molecule, the pigment molecule is preferably at least one selected from azo series, and polycyclic series such as phthalocyanine series, quinacridone series, isoindolinone series, dioxazine series, benzimidazolone series, anthraquinon series, indanthrone series, perylene series and phenanthroline series. The following molecules constituting an ultraviolet absorber (UVA) or a pigment can be suitably used as the abovementioned ultraviolet absorbing molecules or the pigment molecules.

Concrete examples of the benzophenone series ultraviolet absorber include 2-hydroxy-4-n-octoxybenzophenone (SUMISORB(R) 130) 2,4-dihydroxybenzophenone (SEESORB 100), 2-hydroxy-4-methoxybenzophenone (SEESORB 101, CYASORB(R) UV-9), 2-hydroxy-4-methoxybenzophenone-5-sulfonic acid trihydrate (SEESORB 101S), 2-hydroxy-4-octyloxybenzophenone (SEESORB 102), 4-dodecyloxy-2-hydroxybenzophenone (SEESORB 103), 4-benzyloxy-2-hydroxybenzophenone (SEESORB 105), 2,2',4,4'-tetrahydroxybenzophenone (SEESORB 106), 2,2'-dihydroxy-4,4'-dimethoxybenzophenone (SEESORB 107), 1,4-bis(4-benzoyl-3-hydroxyphenoxy)-butane (SEESORB 151), and 2,2'-dihydroxy-4-methoxybenzophenone (CYASORB(R) UV-24).

Concrete examples of the benzotriazole series ultraviolet absorber include 2-(2-hydroxy-5-methylphenyl) benzotriazole (SUMISORB(R) 200), 2-[2-hydroxy-3-(3, 4, 5, 6-tetrahydrophthalimide-methyl)-5-methylphenyl] benzotriazole (SUMISORB(R) 250), 2-(3-tert-butyl-2-hydroxy-5-methylphenyl)-5-chlorobenzotriazole (SUMISORB(R) 300), 2-(2-hydroxy-5-tert-octylphenyl)benzotriazole (SUMISORB(R) 340), 2-(2-hydroxy-3,5-di-tert-pentylphenyl)benzotriazole (SUMISORB(R) 350), 2-(2-hydroxy-5-methylphenyl)-2H-benzotriazole (SEESORB 701), 2-(3-tert-butyl-2-hydroxy-5-methylphenyl)-5-chloro-2H-benzotriazole (SEESORB 703), 2-(3,5-di-tert-pentyl-2-hydroxyphenyl)-2H-benzotriazole (SEESORB 704), 2-(2H-benzotriazole-2-yl)-4-methyl-6-(3,4,5,6-tetrahydrophthalimidylmethyl)phenol (SEESORB 706), 2-(2-hydroxy-4-octyloxyphenyl)-2H-benzotriazole (SEESORB 707), 2-(2-hydroxy- 5-tert-octylphenyl) -2H-benzotriazole (SEESORB 709), 2-(2-hydroxy-5-tert-butylphenyl)-2H-benzotriazole (TINUVIN(R) PS), 2-(2H-benzotriazol-2-yl)-4,6-bis(1-methyl-1-phenylethyl) phenol (TINUVIN(R) 900), 2-(2H-benzotriazol-2-yl)-6-(1-methyl-1-phenylethyl)-4-(1,1,3,3-tetramethylbutyl)phenol (TINUVIN(R) 928), 2,5-bis(5'-tert-butyl-2'-benzoxazolyl) thiophene (UVITEX(R) OB), 2-(2'-hydroxy-3',5'-di-tert-butylphenyl)-5-chlorobenzotriazole (TINUVIN(R) 327, SEESORB 702), 2-[2'-hydroxy-3',5'-bis( α , α -dimethylbenzyl)phenyl]-2H-benzotriazole (TINUVIN(R) 234), 2-(2'-hydroxy-3',5'-di-tert-butylphenyl)benzotriazole (TINUVIN(R) 320, EVERSORB 77), 2,2'-methylenbis[6-(2H-benzotriazol-2-yl)-4-(1,1,3,3-tetramethylbutyl)phenol] (TINUVIN(R) 360, EVERSORB 78), and 2-(2'-hydroxy-3'-sec-butyl-5'-tert-butylphenyl) benzotriazole (EVERSORB 79).

Concrete examples of the benzoate series ultraviolet absorber include 2,4-di-tert-butylphenyl-3,5-di-tert-butyl-4-hydroxybenzoate (SUMISORB(R) 400).

Concrete examples of the triazine series ultraviolet absorber include 2-[4,6-bis(2,4-dimethylphenyl)-1,3,5-triazine-2-yl]-5-(octyloxy)phenol (CYASORB(R) UV-1164), 2-[4-[(2-hydroxy-3-dodecyloxypropyl)oxy]-2-hydroxyphenyl]-4,6-bis(2,4-dimethylphenyl)-1,3,5-triazine (TINUVIN(R) 400), 2-[4-[(2-hydroxy-3-tridecyloxypropyl)oxy]-2-hydroxyphenyl]-4,6-bis(2,4-dimethylphenyl)-1,3,5-triazine (TINUVIN(R) 400), 2-[4-[(2-hydroxy-3-(2'-ethyl)hexyl)oxy]-2-hydroxyphenyl]-4,6-bis(2,4-dimethylphenyl)-1,3,5-triazine (TINUVIN(R) 405), 2,4-bis(2-hydroxy-4-butyloxyphenyl)-6-(2,4-bis-butyloxyphenyl)-1,3,5-triazine (TINUVIN(R) 460), and 2-(2-hydroxy-4-[1-octyloxycarbonylethoxy]phenyl)-4,6-bis(4-phenylphenyl)-1,3,5-triazine (TINUVIN(R) 479).

It should be noted that SUMISORB(R) is produced by Sumitomo Chemical Co., Ltd., SEESORB is produced by Shipro Kasei Kaisha, Ltd., CYASORB(R) is produced by Cytec Industries Inc., TINUVIN(R) and UVITEX (R) are produced by Chiba Specialty Chemicals Co. , Ltd. , and EVERSORB is produced by Everlight Chemical Industrial Corporation, Taiwan Region.

Furthermore, examples of the pigment molecule include azo pigments having from yellow through orange to red hues, phthalocyanine pigments having from blue to green hues, quinacridone pigments having from red to magenta hues, isoindolinone pigments having yellow hues, dioxazine pigments having violet hues, benzimidazolone pigments having from yellow through orange to red hues, anthraquinon pigments having red hues, indanthrone pigments having blue hues, perylene pigments having from maroon to red hues, and phenanthroline pigments having red hues.

Since these ultraviolet absorbers and pigments have a polar part, the nanocomposite particle of the present invention comprising the core particle and the shell layer can be easily formed as mentioned in detail later.

The shell layer enclosing the core particle comprises organic titanosilicate. The organic titanosilicate comprises an Si and Ti oxide containing a bond expressed by M-O-M and has an organic group bonded to at least part of silicon atoms. Note that M is a silicon or titanium atom and O is an oxygen atom.

The organic titanosilicate is formed by subjecting titanium alkoxide and organoalkoxysilane to hydrolysis and dehydration-condensation. The organoalkoxysilane has one or more alkoxy groups and possesses a silicon atom covalently bound to an organic group. As mentioned in detail later, the mechanism of forming organic titanosilicate is that titanium alkoxide and organoalkoxysilane undergo hydrolysis and dehydration-condensation, thereby forming a bond, for example, expressed by R-Si-O-Ti, where R represents an organic group. At this time, part of silicon atoms or titanium atoms constituting organic titanosilicate can be replaced with an atom of another metal. Examples of another metal include Ge, Mg, Al, Ni, Co, Cu, Mn, Fe, Li, V and Zr. When silicon atoms of organoalkoxysilane have one or more alkoxy groups, each silicon atom may be bonded to 1 to 3 organic groups, but part of silicon atoms constituting the organic titanosilicate can be a silicon atom which is not bonded to any organic group.

Examples of titanium alkoxide include titanium tetramethoxide, titanium tetraethoxide, titanium tetraisopropoxide, titanium tetra-n-propoxide, titanium tetra-n-butoxide, titanium tetra-s-butoxide, and titanium tetra-t-butoxide. It is preferable to use titanium tetraisopropoxide or titanium tetra-n-butoxide or the like.

Organoalkoxysilane is not particularly limited as long as it is expressed by RₓSi (OR' ) ₄₋ₓ, where X is 1, 2 or 3, R represents an organic group other than an alkoxy group, and OR' is an alkoxy group. Concretely, it is desirable to use acrylic silanes, vinylsilanes, alkylsilanes, aromatic silanes, epoxy silanes, aminosilanes and amines having -NH₂, -NHCH₃, or -N(CH₃)₂, ureido silanes, halogen silanes, mercaptosilanes, isothiouronium salts, and asid anhydrides. It is also desirable to use organoalkoxysilane possessing a nitrogen-containing heterocycle such as imidazole, imidazoline, pyridine, pyrrole, aziridine and triazole, nitro group (-NO₂), carbomethoxy group (-COOCH₃), aldehyde group (-CH=O), ketone group (-(C=O)-R), hydroxyl group (-OH), sulfonyl group (-S(=O)₂-), a sulfur-containing heterocycle, cyano group (-NC), isocyanate group (-N=C=O) or the like.

Examples of acrylic silanes include beta-acryloxyethyltrimethoxysilane, beta-acryloxypropyltrimethoxysilane, gamma-acryloxyethyltrimethoxysilane, gamma-acryloxypropyltrimethoxysilane, beta-acryloxyethyltriethoxysilane, beta-acryloxypropyltriethoxysilane, gamma-acryloxyethyltriethoxysilane, gamma-acryloxypropyltriethoxysilane, beta-methacryloxyethyltrimethoxysilane, beta-methacryloxypropyltrimethoxysilane, gamma-methacryloxyethyltrimethoxysilane, gamma-methacryloxypropyltrimethoxysilane, beta-methacryloxyethyltriethoxysilane, beta-methacryloxypropyltriethoxysilane, gamma-methacryloxyethyltriethoxysilane, gamma-methacryloxypropyltriethoxysilane, and 3-methacryloxypropylmethyldiethoxysilane. Examples of vinylsilanes include vinyltrimethoxysilane, vinyltriethoxysilane, and p-styryltrimethoxysilane. Examples of alkylsilanes include methyltrimethoxysilane, methyltriethoxysilane, ethyltrimethoxysilane, ethyltriethoxysilane, propyltrimethoxysilane, propyltriethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, tridecyltrimethoxysilane, dodecyltriethoxysilane, hexadecyltrimethoxysilane, hexadecyltriethoxysilane, octadecyltrimethoxysilane, and octadecyltriethoxysilane. Examples of aromatic silanes include phenyltrimethoxysilane and phenyltriethoxysilane. Examples of epoxy silanes include 3-glycidoxypropyltrimethoxysilane, 3-glycidoxypropylmethyldiethoxysilane, 3-glycidoxypropyltriethoxysilane, and 2-(3,4-epoxycyclohexyl) ethyltrimethoxysilane. Examples of amonosilanes and amines include 3-aminopropyltriethoxysilane, 3-aminopropyltrimethoxysilane, 3-aminopropyldimethylethoxysilane, 3-aminopropylmethyldiethoxysilane, 4-aminobutyltriethoxysilane, 3-aminopropyldiisopropylethoxysilane, 1-amino-2-(dimethylethoxysilyl)propane, (aminoethylamino)-3-isobutyldimethylmethoxysilane, N-(2-aminoethyl)-3-aminoisobutylmethyldimethoxysilane, (aminoethylaminomethyl)phenethyltrimethoxysilane, N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, N-(6-aminohexyl)aminomethyltrimethoxysilane, N-(6-aminohexyl)aminomethyltriethoxysilane, N-(6-aminohexyl)aminopropyltrimethoxysilane, N-(2-aminoethyl)-11-aminoundecyltrimethoxysilane, 11-aminoundecyltriethoxysilane, 3-(m-aminophenoxy)propyltrimethoxysilane, m-aminophenyltrimethoxysilane, p-aminophenyltrimethoxysilane, (3-trimethoxysilylpropyl)diethylenetriamine, N-methylaminopropylmethyldimethoxysilane, N-methylaminopropyltrimethoxysilane, dimethylaminomethylethoxysilane, (N,N-dimethylaminopropyl)trimethoxysilane, and (N-acetylglycidyl)-3-aminopropyltrimethoxysilane. Examples of ureido silanes include 3-ureidopropyltriethoxysilane. Examples of halogen silanes include 3-chloropropyltrimethoxysilane. Examples of mercaptosilanes include 3-mercaptopropylmethyldimethoxysilane, 3-mercaptopropyltrimethoxysilane, and 3-mercaptopropyltriethoxysilane. Examples of isothiouronium salts include N-(trimethoxysilylpropyl)isothiouronium chloride. Examples of asid anhydrides include 3-(triethoxysilyl)propylsuccinic asid anhydride, and 3-(trimethoxysilyl)propylsuccinic asid anhydride.

Furthermore, examples of organoalkoxysilane having a nitrogen-containing heterocycle include N-(3-triethoxysilylpropyl)-4,5-dihydroimidazole, 2-(trimethoxysilylethyl)pyridine, N-(3-trimethoxysilylpropyl)pyrrole, and N-[3-(triethoxysilyl)propyl]-2-carbomethoxyaziridine. Examples of organoalkoxysilane having nitro group include 3-(2,4-dinitrophenylamino)propyltriethoxysilane and 3-(triethoxysilylpropyl)-p-nitrobenzamide. Examples of organoalkoxysilane having carbomethoxy group include 2-(carbomethoxy)ethyltrimethoxysilane. Examples of organoalkoxysilane having aldehyde group include triethoxysilylbutylaldehyde. Examples of organoalkoxysilane having ketone group include 2-hydroxy-4-(3-methyldiethoxysilylpropoxy)diphenylketone. Examples of organoalkoxysilane having hydroxyl group include hydroxymethyltriethoxysilane, N-(hydroxyethyl)-N-methylaminopropyltrimethoxysilane, bis(2-hydroxyethyl)-3-aminopropyltriethoxysilane, N-(3-triethoxysilylpropyl)-4-hydroxybutylamide, 11-(triethoxysilyl)undecanal, triethoxysilylundecanal, ethylene glycol acetal, and N-(3-ethoxysilylpropyl)gluconamido. Examples of organoalkoxysilane having sulfonyl group include (2-triethoxysilylpropoxy)ethoxysulfolane. Examples of organoalkoxysilane having a sulfur-containing heterocycle include 2-(3-trimethoxysilylpropylthio)thiophene. Examples of organoalkoxysilane having cyano group include 3-cyanopropylphenyldimethoxysilane, 11-cyanodecyltrimethoxysilane, 3-cyanopropyltrimethoxysilane, and 3-cyanopropyltriethoxysilane. Examples of organoalkoxysilane having isocyanate group include 3-isocyanatepropyltrimethoxysilane.

Silicon alkoxide having no organic group can also be used in combination with organoalkoxysilane, if necessary. Examples of silicon alkoxide having no organic group include tetramethoxysilane (TMOS), tetraethoxysilane (TEOS), tetra-n-propoxysilane, tetraisopropoxysilane, tetra-n-butoxysilane, tetra-sec-butoxysilane, and tetra-tert-butoxysilane.

Preferably the shell layer contains more titanium atoms on the side of the core particle (on an inside thereof) than on an outside thereof. If there are many silicon atoms on the outside of the shell layer, an organic group bonded to a silicon atom can exist on a surface portion of the nanocomposite particle. Having the organic group on the surface,portion of the nanocomposite particle, aggregation of the nanocomposite particles can be effectively restrained in an organic solvent. As a result, even when the nanocomposite particles are added to a coating composition, the nanocomposite particles can be satisfactorily dispersed in the coating composition. Moreover, when an organic group constituting the shell layer has, at a terminal end thereof, a reaction group which can react and form a bond with an organic group constituting another shell layer, a molding or a coating film can be formed by reacting the organic group with that of another shell layer to bond a plurality of nanocomposite particles to each other.

The molar ratio of titanium atoms to silicon atoms (Ti:Si) constituting the shell layer is not particularly limited, but preferably falls in the range of from 1:0.5 to 1:2. The reason why Ti:Si = 1:0.5 to 1:2 is preferable will be mentioned later.

When the nanocomposite particle of the present invention has a reaction group at a terminal end of an organic group, the nanocomposite particle can be used as a main component of a molding raw material or a coating composition as mentioned before. A molding or a coating film obtained from the molding raw material or the coating composition using the nanocomposite particle as a main component can satisfactorily exhibit the functions of the organic molecule enclosed by the shell layer. At the same time, since the shell layer contains a bond expressed by M-O-M, the molding or the coating film can be provided with the properties of inorganic materials such as high hardness and excellent heat resistance and, depending on the amount of organic groups bonded to the silicon atoms, the properties of organic materials such as flexibility and high-speed film formability. Furthermore, since the organic molecule exists in the state of being enclosed by the shell layer in the molding or the coating film, the organic molecule is prevented from being released from the molding or the coating film.

Moreover, owing to high dispersibility in a solvent, when the nanocomposite particle of the present invention is added into a conventional coating composition and coated to form a coating film, the functions of each organic molecule can be exhibited satisfactorily. Examples of the conventional coating composition include organic coating compositions, for instance, resin vanish containing a resin used for a hard coating, such as acrylic resins, silicone resins, melamine resins, epoxy resins, phenol resins and polyester resins. In addition, since the core particle (the organic molecule) is shielded from substances causing degradation of the organic molecule by being enclosed by the shell layer, the nanocomposite particle can maintain the functions of the organic molecule. Examples of the substances causing degradation of the organic molecule include an organic substance contained in a solvent of a coating composition or a coating film, water, and light rays such as ultraviolet rays. Besides, since the organic molecule exists in a coating film in the form of being enclosed by the shell layer, the organic molecule is prevented from being released from the coating film. Moreover, since the coating film is provided with the properties of inorganic materials which the nanocomposite particle has, the coating film is improved in hardness, wear resistance, scratch resistance and so on.

Furthermore, a nanocomposite particle-organic polymer composite material can be obtained by hardening a raw material including a mixture of the nanocomposite particle of the present invention and an organic monomer. Owing to incorporation of the nanocomposite particle into the network structure of resin, the nanocomposite particle-organic polymer composite material attains excellent strength, hardness and gas barrier property and can satisfactorily exhibit the properties of the organic molecule enclosed by the shell layer. It should be noted that in the nanocomposite particle-organic polymer composite material, the nanocomposite particle can be not only in the form of being held in an organic polymer matrix but also bound to an organic monomer to constitute part of an organic polymer, depending on the kind of an organic group of the nanocomposite particle or the kind of the organic monomer. The organic monomer which can be used with the nanocomposite particle is not particularly limited. Examples of preferred acrylic resins used as the organic monomer include mono(metha)acrylate compounds such as methyl (metha)acrylate, ethyl (metha)acrylate, butyl (metha)acrylate, 2-hydroxyethyl (metha)acrylate, 2-hydroxypropyl (metha)acrylate, polyethylene glycol mono(metha)acrylate, cyclohexyl (metha) acrylate, tetrahydrofurfuryl (metha)acrylate, dicyclopentanyl (metha)acrylate, dicyclopentenyl (metha)acrylate, benzyl (metha)acrylate, phenoxyethyl (metha)acrylate, and an adduct of phthalic anhydride and 2-hydroxyethyl (metha)acrylate; di(metha)acrylate compounds such as 1,4-butanediol di(metha)acrylate, 1,6-hexanediol di(metha)acrylate, 1,9-nonanediol di(metha)acrylate, neopentyl glycol di(metha)acrylate, ethylene glycol di(metha)acrylate, polyethylene glycol (polymerization degree n = 2 to 15) di(metha)acrylate, polypropylene glycol (n = 2 to 15) di(metha)acrylate, polybutylene glycol (n = 2 to 15) di(metha)acrylate, 2,2-bis(4-(metha)acryloxyethoxyphenyl) propane, 2,2-bis(4-(metha)acryloxydiethoxyphenyl)propane, trimethylolpropane diacrylate, and bis(2-(metha)acryloxyethyl)-hydroxyethyl-isocyanurate; polyfunctional(metha)acrylate compounds such as trimethylolpropane tri(metha)acrylate, tris(2-(metha)acryloxyethyl)isocyanurate, pentaerythritol tri(metha)acrylate, pentaerythritol tetra(metha)acrylate, dipentaerythritol tetra(metha)acrylate, dipentaerythritol penta(metha)acrylate, and dipentaerythritol hexa(metha)acrylate; epoxy di(metha)acrylate obtained by reacting bisphenol-A diepoxy and (metha)acrylic acid, urethane di(metha)acrylate obtained by reacting isophorone diisocyanate and 2-hydroxypropyl (metha)acrylate, urethane di(metha)acrylate obtained by reacting dicyclomethane diisocyanate and 2-hydroxyethyl (metha)acrylate, polyester (metha)acrylate obtained by reacting trimethylolethane, succinic acid and (metha)acrylic acid, and polyester (metha)acrylate obtained by reacting trimethylolpropane, succinic acid, ethylene glycol and (metha)acrylic acid. Low polymers (oligomers) can also be used. These organic monomers and polymers can be used alone or in combination thereof.

### [Molecular Wrapping Method]

The molecular wrapping method of the present invention is a molecular wrapping method for wrapping one organic molecule or an assembly of organic molecules with organic titanosilicate, and mainly comprises a mixed solution preparing step and a wrapping step.

The mixed solution preparing step is a step of preparing a mixed solution by dissolving at least titanium alkoxide, organoalkoxysilane having one or more alkoxy groups and possessing a silicon atom covalently bound to an organic group, and an organic molecule in a dehydrated solvent.

In the mixed solution preparing step, silicon alkoxide or the like can be dissolved in the dehydrated solvent, if necessary, in addition to titanium alkoxide, organoalkoxysilane and the organic molecule to prepare a mixed solution. A detailed description of titanium alkoxide and organoalkoxysilane has been given in the section of [Nanocomposite Particle]. Silicon alkoxide can be used in combination with organoalkoxysilane, if necessary, in order to control the amount of the organic group to be contained in the organic titanosilicate. Silicon alkoxide is not particularly limited as long as it has one or more alkoxy groups and possesses no silicon atom bonded to an organic group. In addition, when part of silicon atoms or titanium atoms are replaced with an atom of another metal, a salt or an alkoxide containing the metal atom can be used in combination. Although the optimum concentration of raw materials to be used (titanium alkoxide, organoalkoxysilane, an organic molecule and, if necessary, silicon alkoxide or the like) in a mixed solution differs depending on the molecular weight of the raw materials to be used, but in general the total weight of the raw materials is desirably 50% by weight or less and more desirably 30% by weight or less, based on the total weight of the mixed solution taken as 100% by weight.

If water exists in the mixed solution, titanium alkoxide and organoalkoxysilane will react immediately in the mixed solution preparing step. Therefore, as a solvent of the mixed solution, a dehydrated solvent is used which has been dehydrated (not more than 0.5 % by weight of water is permissible based on the total weight of the dehydrated solvent taken as 100% by weight) in order not to react with titanium alkoxide or organoalkoxysilane during the preparation of the mixed solution. Furthermore, the mixed solution preparing step can be carried out in an inert gas atmosphere.

The dehydrated solvent is not particularly limited as long as it can dissolve titanium alkoxide, organoalkoxysilane and the organic molecule, but it is desirable to use an organic polar solvent. Note that considering adding water to the mixed solution in the following wrapping step, it is preferable that water is soluble in the dehydrated solvent. For example, water solubility in 100 ml of the dehydrated solvent at 25°C is desirably not less than 1 g/100ml and more desirably not less than 5 g/100ml. Furthermore, if the water-added mixed solution is introduced into water in the wrapping step, which will be mentioned in detail later, it is desirable to use a solvent which can be infinitely diluted with water. Examples of the desirable dehydrated solvent include alcohols such as methanol, ethanol, 1-propanol, 2-propanol, n-butanol, and 2-butanol; ketones such as acetone, methyl ethyl ketone, diethyl ketone, methyl butyl ketone, methyl isobutyl ketone, cyclohexanone and methyl cyclohexanone; ethers such as ethyl ether, ethylene glycol monoethyl ether, ethylene glycol monoethyl ether acetate, ethylene glycol monobutyl ether, dimethyl ether, ethyl methyl ether, diethyl ether and ethylene glycol monomethyl ether; cyclic ethers such as furan, dibenzofuran, tetrahydrofuran, tetrahydropyran and dioxane; esters such as methyl acetate, ethyl acetate, isopropyl acetate, propyl acetate, butyl acetate, isopentyl acetate and pentyl acetate; amides such as N,N-dimethylformamide, dimethylacetamide, dimethyl sulfoxide methylacetamide, methylformamide, dimethylacetamide, dimethylformamide and N-methyl-2-pyrolidone; cyclic amines such as piperidine, pyrimidine and quinoline; and nitriles such as acetonitrile, propionitrile and benzonitrile. As the dehydrated solvent, it is possible to use only one of these solvents or a mixture of two or more of these solvents. If the step of introducing the water-added mixed solution into water, which will be mentioned in detail later, is omitted in the wrapping step, it is possible to use a mixed solvent of one or more of the listed solvents and one or more solvents selected from halogens such as trichloromethane, carbon tetrachloride, 1,2-dichloroethane, 1,2-dichloroethylene, 1,1,2,2-tetrachloroethane and trichloroethylene; and aromatic compounds such as benzene, toluene, ortho-xylene, meta-xylene, para-xylene, ethylbenzene and cresol.

When the mixed solution prepared in the mixed solution preparing step is left stand for a while (desirably 10 to 180 minutes) after stirring, an alkoxy group of organoalkoxysilane is coordinated with a titanium atom of titanium alkoxide. In addition, since the organic molecule also tends to be coordinated with the titanium atom, titanium alkoxide coordinated with organoalkoxysilane associates around the organic molecule to form an associate. Especially when part of the organic molecule contains a polar molecule, a polar part of the organic molecule tends to form a coordinate bond with the titanium atom. At this time, since titanium alkoxide together with organoalkoxysilane associates with the organic molecule to form an associate, aggregation of associates is restrained.

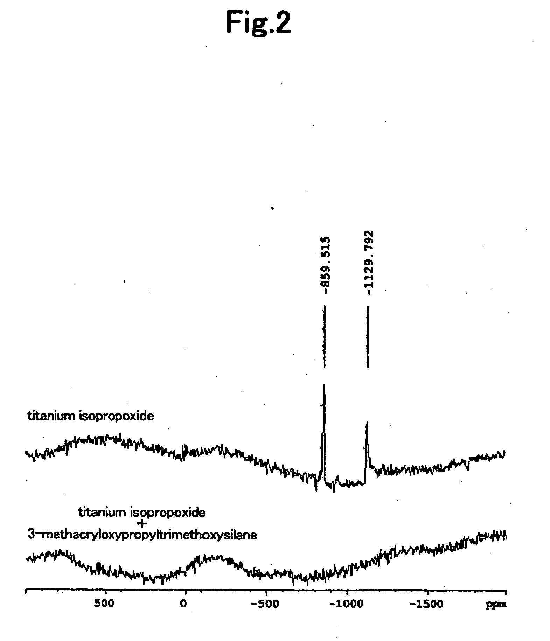

It is apparent from a ^{47,49}Ti NMR spectrum of titanium isopropoxide and a ^{47,49}Ti NMR spectrum of a mixture of titanium isopropoxide and 3-methacryloxypropyltrimethoxysilane at the ratio of 1: 2 that an alkoxy group of organoalkoxysilane and the organic molecule are coordinated with a titanium atom of titanium alkoxide. The ^{47,49}Ti NMR spectra are shown in Figure 2. The ^{47,49}Ti NMR spectrum of titanium isopropoxide (the upper spectrum in Figure 2) shows two peaks and suggests that titanium isopropoxide has a stable four-coordinate geometry in which four oxygen atoms bonded to a titanium atom are located in tetrahedral positions. On the other hand, the ^{47,49}Ti NMR spectrum (the lower spectrum in Figure 2) of the mixture of titanium isopropoxide and 3-methacryloxypropyltrimethoxysilane shows that the peaks have disappeared and suggests that the state surrounding a titanium atom has been changed by mixing alone without adding water. Namely, it is believed that the structure in which six oxygen atoms are located around a titanium atom is also stable. Also in the molecular wrapping method of the present invention, it is predicted that a titanium atom of titanium alkoxide forms coordinate bonds with organoalkoxysilane and the organic molecule, thereby forming an associate.

Namely, since an associate in which titanium alkoxide and organoalkoxysilane associate around the organic molecule is formed in the mixed solution, the organic molecule tends to be wrapped with organic titanosilicate in the next wrapping step. At this time, since the organic molecule is dissolved in the mixed solution, the organic molecule may exist as one molecule or as an assembly of molecules, or at least part of the organic molecule may be dissociated electrolytically. Although depending on the mixing ratio of titanium alkoxide, organoalkoxysilane and the organic molecule, because titanium alkoxide forming a coordinate bond with organoalkoxysilane coordinates with the organic molecule to form an associate, the formed organic titanosilicate tends to contain more titanium atoms on the side of the organic molecule (on an inside thereof) than on an outside thereof.

In the mixed solution preparing step, it is desirable to prepare the mixed solution so that the molar ratio of titanium atoms to silicon atoms (Ti: Si) falls in the range of from 1: 0.5 to 1: 2. When the silicon atoms are contained at the molar ratio of Ti: Si = 1: 0.5 or more, the particle containing the organic molecule wrapped in the mixed solution after the wrapping step is satisfactorily dispersed and aggregation of the particles is restrained. More desirably the silicon atoms are contained at the molar ratio of Ti: Si = 1: 0.8 or more. Furthermore, a titanium atom tends to more easily form a coordinate bond with an alkoxy group of organoalkoxysilane than the organic molecule, although depending on the level of polarity of the organic molecule. Considering that a titanium atom is four to six-coordinate, it is desirable that the number of silicon atoms is two or less, because the organic molecule can easily form a coordinate bond with a titanium atom in the mixed solution. The number of silicon atoms is more desirably less than 2 and much more desirably 1.5 or less.

Especially when the mixed solution is prepared approximately at the molar ratio of Ti:Si = 1:1, titanium alkoxide and organoalkoxysilane associate at the ratio of 1:1 and at the same time the organic molecule easily coordinates with titanium alkoxide in the mixed solution. As a result, in the later wrapping step, it is easy to form organic titanosilicate having a layered structure which possesses a R-Si-O-Ti bond, where R represents an organic group, and comprises an inner layer containing a titanium atom and possessing a Ti-O-Ti bond, and an outer layer containing a silicon atom and possessing an Si-O-Si bond.

Furthermore, in order to fully wrap the organic molecule dissolved in the mixed solution with organic titanosilicate, it is necessary to use titanium alkoxide and organoalkoxysilane in amounts determined by the amount used, property, size and shape of the organic molecule. For example, if an organic molecule having an organic straight chain structure is used, fairly large amounts of titanium alkoxysilane and organoalkoxysilane are necessary to completely wrap the whole organic molecule. On the other hand, an alkyl chain or the like contained in a pigment molecule or an ultraviolet absorbing molecule has been added in order to improve compatibility with a solvent or the like and has no relation with a coloring property or an ultraviolet absorbing effect. Therefore, it is not necessary to completely wrap the whole pigment molecule or an ultraviolet absorbing molecule. Moreover, since in general pigment molecules or ultraviolet absorbing molecules can exhibit their properties better when dispersedly held in an organic matrix, it is desirable to individually wrap each of the molecules. Moreover, in order to shield the organic molecule from substances causing degradation of the organic molecule, it is effective to individually wrap each of the molecules. However, it is not always necessary to individually wrap each of the organic molecules because even when the organic molecules are wrapped as an assembly, the same level of advantages can be expected as when each of the molecules is individually wrapped, and because there are some organic molecules, such as chlorophyll, which are more stable when they exist as an assembly. In consideration of the above, the number of titanium alkoxide molecules to be used is desirably five times or more of the number of organic molecules to be wrapped, and more desirably 8 to 100 times. Furthermore, if the amount of organoalkoxysilane to be used is determined with respect to titanium alkoxide so that the molar ratio of Ti: Si falls in the above desired range, the organic molecule is satisfactorily wrapped.

The wrapping step is a step of wrapping an organic molecule or an assembly of organic molecules with organic titanosilicate by adding water to the mixed solution prepared in the mixed solution preparing step to subject titanium alkoxide and organoalkoxysilane to hydrolysis and dehydration-condensation.

When water is added to the mixed solution prepared in the mixed solution preparing step, titanium alkoxide and organoalkoxysilane undergo hydrolysis and dehydration-condensation. Titanium alkoxide having a higher reaction rate is hydrolyzed before organoalkoxysilane and yields -Ti-OH. The -Ti-OH promotes hydrolysis of organoalkoxysilane and is further bonded. At this time, as described before, titanium alkoxide and organoalkoxysilane associate around the organic molecule to form an associate in the mixed solution. Since titanium alkoxide and organoalkoxysilane undergo hydrolysis and dehydration-condensation in such association state, the organic molecule is wrapped with organic titanosilicate which comprises an Si and Ti oxide containing a bond expressed by M-O-M, where M is a silicon or titanium atom and O is an oxygen atom, and has an organic group bonded to at least part of silicon atoms. At this time, the organic molecule may react and form a bond with at least part of organic titanosilicate, or may be coordinated with organic titanosilicate.

The amount of water to be added in the wrapping step can be twice or more of the number of moles of titanium alkoxide in the mixed solution, if the water-added mixed solution is introduced into water as mentioned in detail later. It is desirable that when the amount of water to be added is n times of {(the number of moles of titanium alkoxide x 4) + (the number of moles of organoalkoxysilane x the number of alkoxy groups} /2, n is 1 or more, and more desirably 1 ≦ n ≦ 8. Especially when the step of introducing the water-added mixed solution into water is omitted, n is desirably 2 or more. In adding water into the mixed solution, it is more desirable to add dropwise a solution of water diluted with an organic solvent (a mixed solution of water and an organic solvent) than to add water alone. Desirably water is diluted with an organic solvent so that the water concentration is 20 % by weight or less and more desirably 12 % by weight or less, and preferably at least 1% by weight, based on the total weight of the diluted water solution taken as 100% by weight. The drop rate of the water diluted with the organic solvent into the mixed solution is desirably such that a predetermined amount of diluted water finishes dropping at a constant speed in 10 minutes or more, and more desirably in 30 minutes to two hours, although depending on the scale of the entire synthesis. Moreover, a catalyst promoting hydrolysis or dehydration-condensation can be added to the mixed solution before water is added or at the time when water is added or directly to water to be added.

The nanocomposite particle of the present invention is dispersed in the mixed solution after the wrapping step completes. The nanocomposite particle of the present invention can be obtained by removing, by filtering or drying, the solvent from the mixed solution after the wrapping step. It should be noted that the mixed solution after the wrapping step can be used as it is as a coating composition.

Moreover, the wrapping step can be a step of introducing the water-added mixed solution into water. Upon introducing the water-added mixed solution into water, an alkoxy group of organoalkoxysilane completely reacts and completes organic titanosilicate synthesis. The volume of water to which the mixed solution is introduced is preferably 0.5 to 10 times of the volume of the dehydrated solvent used in the preparing step.

In the wrapping step, introduction of the mixed solution into water is not always necessary. When a molding or a coating film is formed by thermosetting a molding raw material or a coating composition containing the nanocomposite particle, since heating completes organic titanosilicate synthesis, the step of introducing the mixed solution into water can be omitted. Organic titanosilicate synthesis can be completed by heating at 120°C or more. However, in the case of the nanocomposite particle having a shell layer comprising acrylic organic titanosilicate, if the mixed solution is introduced into water in the wrapping step, a molding or a coating film produced by using the nanocomposite particle will show higher transparency and higher hardness.

### Preferred Embodiments of the Present Invention

Nanocomposite particles were produced by wrapping a molecule having an ultraviolet absorbing effect with organic titanosilicate based on the abovementioned embodiments. Coating films were also formed on glass substrates by using the produced nanocomposite particles. A method for synthesizing nanocomposite particles and a method for producing coating films will be described below.

### [Synthesis of Nanocomposite Particle]

### [UVA Wrapping Methacryl Titanosilicate]

1.69 g (2.5 mmol) of an ultraviolet absorber (UVA) (TINUVIN(R) 479 produced by Chiba Specialty Chemicals Co., Ltd.) was dissolved into 125 ml of a dehydrated solvent (tetrahydrofuran) in a glove box under a nitrogen stream. 250 ml of 2-propanol, 14.2 g (50 mmol) of titanium tetraisopropoxide and 12.4g (50 mmol) of 3-methacryloxypropyltrimethoxysilane were added to the UVA-added dehydrated solvent and stirred vigorously, thereby preparing a mixed solution.

While the obtained mixed solution was kept stirred, 250 ml of water diluted with an organic solvent, which was prepared by adding 2-propanol to 50 g of ion-exchanged water to bring the total volume to 1 liter, was dropped at the rate of 6.25 ml/min into the mixed solution. Subsequently, while kept stirred vigorously, this solution was introduced into 1 liter of ion-exchanged water. After left stand at room temperature for two days, the solution was subjected to vacuum freeze-drying, thereby obtaining 15.2 g of nanocomposite particles (UVA wrapping methacryl titanosilicate).

Note that when the mixed solution prepared by the above procedure is introduced into ion-exchanged water, if part of UVA remains unwrapped in the mixed solution, the part of UVA is expected to be precipitated and deposited because of its insolubility to water. However, UVA precipitation was not confirmed in the solution after the mixed solution was introduced into ion-exchanged water and left stand, because the hydrophobic nanocomposite particles aggregated in water and were emulsified. Therefore, it is believed that most of the UVA was wrapped with shell layers formed by reacting titanium tetraisopropoxide and 3-methacryloxypropyltrimethoxysilane.

Moreover, when propylene glycol monomethyl ether (PGM: 1-methoxy-2-propanaol) was added to the obtained nanocomposite particles and left stand for two days, a yellow transparent solution was obtained.

### [UVA Wrapping Acryl Titanosilicate]

20.2 g of nanocomposite particles (UVA wrapping acryl titanosilicate) were obtained by a similar procedure to the above, except for using a mixed solution prepared by dissolving 1.69 g (2.5 mmol) of the ultraviolet absorber (TINUVIN(R) 479) into 250 ml of the dehydrated solvent (tetrahydrofuran) and then dissolving 14.2 g (50 mmol) of titanium tetraisopropoxide and 11.7 g (50 mmol) of 3-acryloxypropyltrimethoxysilane into the UVA-added dehydrated solvent.

### [UVA Wrapping Propyl Titanosilicate]

9.8 g of nanocomposite particles (UVA wrapping propyl titanosilicate) were obtained by a similar procedure to the above, except for using a mixed solution prepared by dissolving 1. 69 g (2.5 mmol) of the ultraviolet absorber (TINUVIN(R) 479) into 250 ml of the dehydrated solvent (tetrahydrofuran) and then dissolving 14.2 g (50 mmol) of titanium tetraisopropoxide, 3.80 g (25 mmol) of tetramethoxysilane (produced by Tokyo Chemical Industry Co., Ltd.) and 4.1 g (25 mmol) of propyltrimethoxysilane (produced by Shin-Etsu Chemical Co., Ltd.) into the UVA-added dehydrated solvent.

### [Preparation of UVA Wrapping Propyl Titanosilicate Dispersed in an Aqueous Solution of PGM and 2-Propanol]

0.33 g (0.5 mmol) of the ultraviolet absorber (TINUVIN(R) 479) was dissolved into 50 ml of a dehydrated solvent (propylene glycol monomethyl ether (PGM) produced by Wako Pure Chemical Industries, Ltd.) in a glove box under a nitrogen stream. 2.84 g (10 mmol) of titanium tetraisopropoxide, 0.76 g (0.5 mmol) of tetramethoxysilane, and 0.82 g (0.5 mmol) of propyltrimethoxysilane were added to the UVA-added dehydrated solvent and stirred vigorously, thereby preparing a mixed solution.

While the obtained mixed solution was kept stirred, 7.2 ml of water diluted with an organic solvent, which was prepared by adding 2-propanol to 50 g of ion-exchanged water to bring the total volume to 1 liter, was dropped at the rate of 0.5 ml/min to the mixed solution. After this mixed solution was left stand for 10 minutes, 6.3 ml of water diluted with an organic solvent, which was prepared by adding 2-propanol to 50 g of ion-exchanged water to bring the total volume to 1 liter, was further dropped at the rate of 0.2 ml/min to the mixed solution. Subsequently, while kept stirred vigorously, this solution was introduced into 1 liter of ion-exchanged water.

Even after the obtained solution was left stand overnight at room temperature, no precipitates were observed and the solution was confirmed to be a yellow transparent solution.

### [Synthesis of Layered Methacryl Titanosilicate (Comparative Example)]

14.2 g (50 mmol) of titanium tetraisopropoxide and 24.8 g (100 mmol) of 3-methacryloxypropyltrimethoxysilane were added to 500 ml of 2-propanol and stirred vigorously in a glove box under a nitrogen stream, thereby preparing a mixed solution. While the obtained mixed solution was kept stirred, 250 ml of water diluted with an organic solvent, which was prepared by adding 2-propanol to 50 g of ion-exchanged water to bring the total volume to 1 liter, was dropped at the rate of 6.25 ml/min to the mixed solution. Subsequently, while kept stirred vigorously, this solution was introduced into 1 liter of ion-exchanged water. After this solution was left stand at room temperature for two days, the solution was subjected to vacuum freeze-drying, thereby obtaining 20.2 g of layered methacryl titanosilicate. The obtained layered methacryl titanosilicate has a layered structure in which an octahedral sheet having titanium as a central atom and tetrahedral sheets formed on both the sides of the octahedral sheet and having silicon as a central atom are laminated.

### [Formation of Coating Films]

Coating composition No.1 to No.5 were prepared by using the organic titanosilicate obtained by the above procedures. The coating compositions were prepared by adding the respective components in the amounts shown in Table 1 to 8 g of a solvent (PGM). Note that Coating Composition No. 3 was mainly composed of an organic monomer and did not contain organic titanosilicate.

**[TABLE 1]**

| COATING COMPOSITION | COMPONENT 1 | | COMPONENT 2 | | UVA | INITIATOR 1 | INITIATOR 2 |
|---|---|---|---|---|---|---|---|
| | | (g) | | (g) | (g) | (g) | (g) |
| No.1 | layered | 1.4 | PETA | 0.6 | 0.2 | 0.06 | 0.04 |
| No.2 | particle | 1.4 | PETA | 0.6 | - | 0.06 | 0.04 |
| No.3 | - | - | PETA | 2.0 | 0.2 | 0.06 | 0.04 |
| No.4 | layered | 2 | - | - | 0.2 | 0 | 0 |
| No.5 | particle | 2 | - | - | - | 0 | 0 |

In Table 1, "layered" means layered methacryl titanosilicate and "particle" means UVA wrapping methacryl titanosilicate and both of them were synthesized by the above procedures. "PETA" means pentaerythritol triacrylate. "UVA" is TINUVIN(R) N479, and the amount of the UVA does not include the wrapped UVA. "Initiator 1" is IRGACURE(R) 184 (1-hydroxycyclohexylphenylketone) produced by Chiba Specialty Chemicals Co., Ltd. and "Initiator 2" is IRGACURE(R) 819 (bis(2,4,6-trimethylbenzoyl)-phenylphosphine oxide) produced by Chiba Specialty Chemicals Co., Ltd.

Each of Coating Composition No. 1 to No.5 thus prepared was coated on a surface of a slide glass substrate by flow coating and dried at room temperature for 20 minutes. Then Coating Composition No. 1 to No.3 were hardened by ultraviolet radiation and Coating Composition No.4 and No.5 were hardened by heating. Note that hardening by ultraviolet radiation was conducted by radiating ultraviolet rays from a 100W high-pressure mercury lamp (HLR-100T produced by Sen Lights Corporation, Japan) for 15 minutes. Hardening by heating was conducted by heating the compositions at 150°C for 2 hours and then at 200°C for 6 hours by an inert oven (DN6101 produced by Yamato Scientific Co., Ltd., Japan). When any of the coating compositions was used, a highly transparent coating film having a film thickness of about 5 µm was obtained on the substrate.

Test pieces in which a coating film was formed on the substrate by using Coating Composition Nos.1, 2, 3, 4 and 5 will be respectively referred hereinafter to as TP1, TP2, TP3, TP4 and TP5.

### [Evaluation]

### [Evaluation of UVA stability]

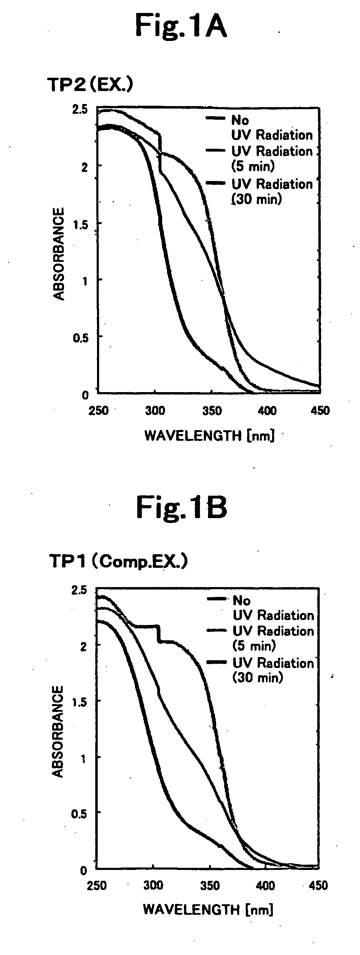

In order to evaluate stability of the UVA in the coating films formed by using Coating Composition Nos. 1 and 2, the intensity of ultraviolet rays absorbed by TP1 and TP2 (UV absorbance of TP1 and TP2) was measured. The stability of the UVA was evaluated by measuring UV absorbance of samples prepared by degrading the test pieces by UV irradiation. Namely, three kinds of samples were prepared for each test piece: samples which had not been subjected to UV irradiation (the test pieces as they were), samples which had been subjected to UV irradiation for 5 minutes, and samples which had been subjected to UV irradiation for 30 minutes, and their UV absorbance was measured. UV irradiation to the samples was conducted by using a 250W UV lamp (PanaCure ANUP5251 produced by Matsushita Electric Works, Ltd.). UV absorbance was measured by a multi-purpose spectrophotometer (MPS2400 produced by Shimadzu Corporation, Japan) in the wavelength range of from 200 to 500 nm. The results of TP2 are shown in Figure 1A and the results of TP1 are shown in Figure 1B. Note that Figures 1A and 1B show UV absorbance only in the wavelength range of from 250 to 450nm excerpted from the obtained test results.

In respect of the samples without UV irradiation, there was no big difference between the absorbance of TP1 and that of TP2. In respect of the samples after UV irradiation, the absorbance of TP1, in which the UVA existed in the coating film without being wrapped, was greatly decreased when compared to the absorbance of TP2, in which the UVA existed in the coating film in the state of being wrapped with methacyl titanosilicate. In the case of TP2, about 80% of the properties of the UVA were held at a wavelength of 350 nm even if it was the sample which had been subjected to UV irradiation for 5 minutes.

From the values of Table 1, it is calculated that 9.1 % by weight of UVA was contained in the coating film of TP1 (The UVA content was calculated as UVA [g] / (Component 1 + Component 2 + UVA) [g] = 0.2/2.2=0.091). On the other hand, it is estimated from the amount of UVA prescribed and the yield after the synthesis that UVA wrapping methacryl titanosilicate contained 11 % by weight of UVA at the maximum (The UVA ratio was calculated as 1.69 / 15.2 = 0.11). Namely, it is believed that 7.7 % by weight of UVA was contained at the maximum in the coating film of TP2 (The UVA ratio was calculated as (Component 1 [g] ] x 0.11 / (Component 1 + Component 2) [g] = 0.077) . Therefore, the UVA content of the coating film of TP2 was smaller than that of TP1. However, according to the above test results, the decrease of absorbance of TP2 was smaller than that of TP1. This suggests that the UVA attained a longer operating life in the coating film of TP2 produced by using Coating Composition No.2.

Namely, it became apparent that wrapping the UVA with methacryl titanosilicate suppresses release or degradation of the UVA.

### [Elastic Modulus and Surface Hardness Measurement of Coating Films]

Elastic modulus and surface hardness of the coating films were measured by nanoindentation technique. The surface hardness was examined by coupling a nanoindenter for measuring nanohardness and elastic modulus (TriboScope(R) produced by Hysitron Incorporated, the USA) to a scanning probe microscope (SPM9500J3 produced by Shimadzu Corporation, Japan). The measurement was carried out under the maximum load of 1000 µN at an indentation rate of 100 µm/sec. The surface hardness and the elastic modulus are shown in Table 2.

**[TABLE 2]**

| TEST PIECE | COATING COMPOSITION | ELASTIC MODULUS | HARDNESS |
|---|---|---|---|
| | | [GPa] | [GPa] |
| TP1 | No.1 | 9.07 | 0.51 |
| TP2 | No.2 | 9.60 | 0.59 |
| TP3 | No.3 | 7.00 | 0.34 |
| TP4 | No.4 | 14.60 | 1.05 |
| TP5 | No.5 | 15.10 | 1.13 |

The coating film of TP3 did not contain layered methacryl titanosilicate or UVA wrapping methacryl titanosilicate and had an elastic modulus (a reduced elastic modulus "Er" calculated from indentation contact) of 7.00 GPa and a surface hardness (indentation hardness HIT) of 0.34 GPa. On the other hand, the coating films of TP1 and TP2 contained layered methacryl titanosilicate or UVA wrapping methacryl titanosilicate in addition to PETA and had higher elasticity and hardness than the coating film of TP3. Especially the coating film of TP2 containing UVA wrapping methacryl titanosilicate showed higher elastic modulus and surface hardness than those of TP1. This is because UVA wrapping methacryl titanosilicate was uniformly dispersed in Coating Composition No.2 without aggregating and was composited by being incorporated into the network structure and as a result a uniform coating film satisfactorily exhibiting the effect of adding UVA wrapping methacryl titanosilicate was obtained.

On the other hand, the coating film of TP5 comprised UVA wrapping methacryl titanosilicate alone and had an extremely high elastic modulus of 15.10 GPa and an extremely high surface hardness of 1.13 GPa, which were higher than those of the coating film of TP4 comprising layered methacryl titanosilicate and the UVA. This is because the use of the UVA wrapping methacryl titanosilicate in which the UVA was wrapped with methacryl titanosilicate allows more uniform dispersion of UVA and methacryl titanosilicate in the coating film when compared with when the UVA and layered methacryl titanosilicate coexisted in the coating film.

### [Solid-State NMR Spectral Analysis]

The UVA wrapping methacryl titanosilicate synthesized by the above procedure was subjected to solid-state nuclear magnetic resonance (NMR) spectral analysis. ¹³C cross polarization-magic angle spinning (CP-MAS) NMR spectroscopic analysis (Analysis 1) and ²⁹Si high-power decoupling MAS (HD-MAS) NMR spectroscopic analysis (Analysis 2) were carried out by using an NMR spectrometer (AVANCE (R) 400 produced by Bruker BioSpin Corporation).

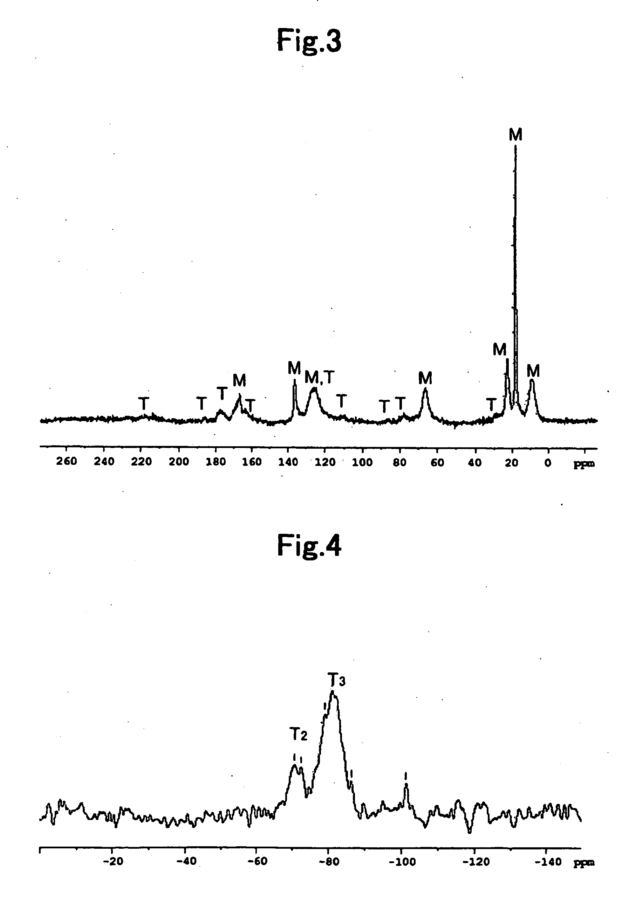

An NMR spectrum obtained by Analysis 1 is shown in Figure 3. In this figure, 'M's are signals from carbon in the methacryloxypropyl structure bound to a Si atom and 'T's are signals from a carbon atom in the UVA (TINUVIN(R) 479). These signals were observed at the same positions as those of respective NMR spectra of the UVA and 3-methacryloxypropyltrimethoxysilane before the synthesis. Namely, it was confirmed that both of the organic structures existed as they were in the UVA wrapping methacryl titanosilicate.

An NMR spectrum obtained by Analysis 2 is shown in Figure 4. In this figure, 'T₂' is a signal from an Si atom having one Si-OH (silanol group), and having two Si-O involved in an Si-O-M bond with their neighboring Si or Ti atom. 'T₃' is a signal from an Si atom having no Si-OH, and having three Si-O involved in the bond with their neighboring Si or Ti atom. It was confirmed from Figure 4 that as Si atoms in the UVA wrapping methacryl titanosilicate, mainly T₃ existed and T₂ existed in a small amount and that the sol-gel reaction completed sufficiently.

### [TEM Observation]

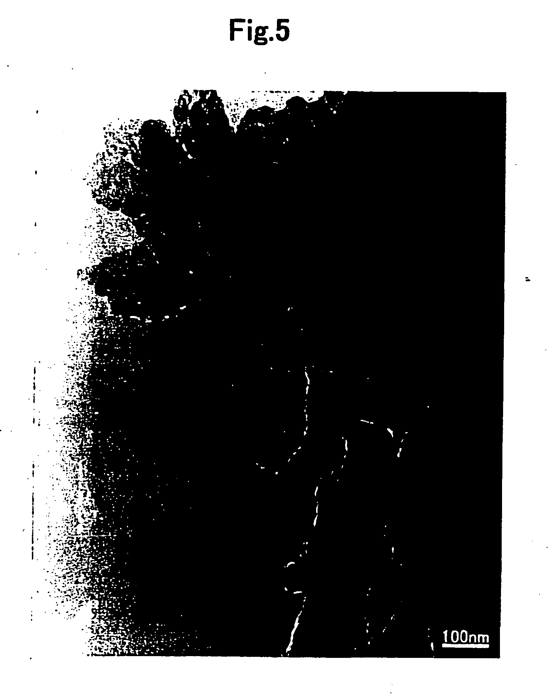

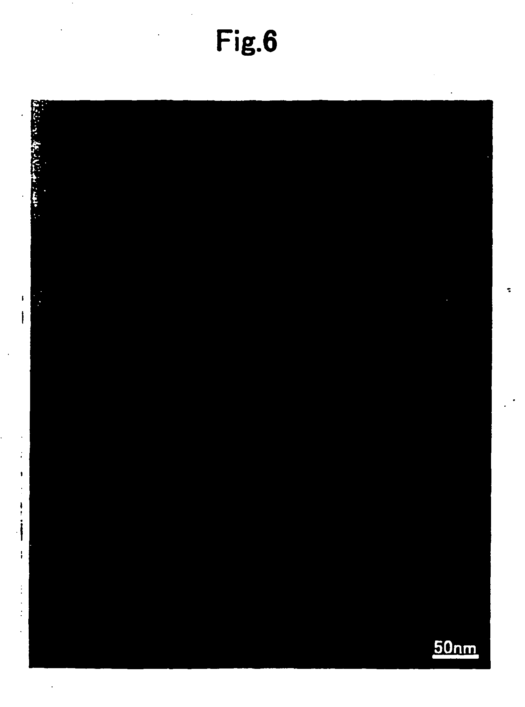

The UVA wrapping methacryl titanosilicate synthesized by the above procedure was observed by using a high-resolution transmission electron microscope (TEM). TEM observation was conducted by using JEM2000EX/THGZ produced by JEOL Ltd., Japan under an accelerating voltage of 200 kV. Two kinds of samples were prepared: Sample A was prepared by placing UVA wrapping methacryl titanosilicate obtained after vacuum freeze drying on a microgrid as it was, and Sample B was prepared by dispersing the vaccum freezed dried powder in PGM, dropping the dispersion fluid (solid content: 20 % by weight) on a microgrid and drying it. A TEM image of Sample A is shown in Figure 5 and a TEM image of Sample B is shown in Figure 6.

As mentioned before, when the mixed solution is introduced into ion-exchanged water in the final stage of the synthesis of UVA wrapping methacryl titanosilicate, the mixed solution is emulsified. It was confirmed from the TEM image of Sample A in Figure 5 that powder obtained by vacuum freeze drying the emulsified solution comprised assemblies of particles of about 30 to 60 nm in diameter formed by aggregation of nanocomposite particles in water. At this time, the UVA is considered to be uniformly distributed in the powder.

On the other hand, it was confirmed from the TEM image of Sample B in Figure 6 that there were smaller particles of several nanometers. Considering the molecular weight of the UVA is 677.9, it is believed that one particle of several nanometers is one nanocomposite particle.

### [Composition Analysis by XPS]

The elemental composition of the UVA wrapping methacryl titanosilicate and UVA wrapping acryl titanosilicate was analyzed by an X-ray photoelectron spectrometer (XPS). The XPS used was Quantera SXM produced by Ulvac-Phi with a monochromatic Al K_{α} X-ray source and an analytical spot size of about 100 µm in diameter. The analytical results are shown in Table 3.

**[TABLE 3]**

| | ELEMENTAL COMPOSITION [atomic %] | | | | |
|---|---|---|---|---|---|
| | C | O | N | Si | Ti |
| UVA WRAPPING ACRYL TITANOSILICATE | 58 | 30 | 1.1 | 6.6 | 4.4 |
| UVA WRAPPING METHACRYL TITANOSILICATE | 56 | 32 | 0.9 | 6.7 | 4.8 |

As mentioned before, UVA wrapping methacryl titanosilicate and UVA wrapping acryl titanosilicate were respectively synthesized by using 2.5 mmol of the UVA, 50 mmol of titanium alkoxide and 50 mmol of organoalkoxysilane. Namely, the number of Si atoms was equal to the number of Ti atoms and the number of UVA molecules was one-twentieth of the number of Si atoms or the number of Ti atoms.

According to the analytical results shown in Table 3, in both the synthesized nanocomposite particles, Si [atomic %] / Ti [atomic %] was about 1 and the number of UVA molecules was about one-twentieth of the number of Si atoms (or the number of Ti atoms) and therefore it was confirmed that the nanocomposite particles were synthesized approximately as prescribed. Note that since TINUVIN (R) 479 used for the synthesis contains 3 nitrogen atoms per molecule, the number of molecules can be calculated as N [atomic %] / 3.

## Claims

1. A nanocomposite particle comprising:
a core particle being one organic molecule or an assembly of organic molecules; and
a shell layer enclosing the core particle and comprising organic titanosilicate which comprises an Si and Ti oxide containing a bond expressed by M-O-M, where M is a silicon or titanium atom and O is an oxygen atom, and has an organic group bonded to at least part of silicon atoms.

2. The nanocomposite particle according to claim 1, wherein at least part of the organic molecule contains a polar molecule.

3. The nanocomposite particle according to claim 1, wherein at least part of the organic molecule contains an ultraviolet absorbing molecule having an ultraviolet absorbing effect or a pigment molecule having a coloring property.

4. The nanocomposite particle according to claim 3, wherein the ultraviolet absorbing molecule is at least one selected from the group consisting of benzophenone series, benzotriazole series, benzoate series and triazine series.

5. The nanocomposite particle according to claim 3, wherein the pigment molecule is at least one selected from the group consisting of azo series, phthalocyanine series, quinacridone series, isoindolinone series, dioxazine series, benzimidazolone series, anthraquinon series, indanthrone series, perylene series and phenanthroline series.

6. The nanocomposite particle according to any one of claims 1 to 5, wherein the shell layer contains more titanium atoms on an inside thereof than on an outside thereof.

7. The nanocomposite particle according to any one of claims 1 to 6, wherein the organic group constituting the shell layer has, at a terminal end thereof, a reaction group which can react and form a bond with an organic group constituting another shell layer.

8. The nanocomposite particle according to any one of claims 1 to 7, wherein the organic titanosilicate is formed by subjecting at least titanium alkoxide, and organoalkoxysilane having one or more alkoxy groups and possessing a silicon atom covalently bound to the organic group to hydrolysis and dehydration-condensation.

9. A molecular wrapping method for wrapping one organic molecule or an assembly of organic molecules with organic titanosilicate, comprising:
a mixed solution preparing step of preparing a mixed solution by dissolving at least titanium alkoxide, organoalkoxysilane having one or more alkoxy groups and possessing a silicon atom covalently bound to an organic group, and an organic molecule in a dehydrated solvent; and
a wrapping step of wrapping the organic molecule with organic titanosilicate by adding water to the mixed solution to subject titanium alkoxide and organoalkoxysilane to hydrolysis and dehydration-condensation with titanium alkoxide and organoalkoxysilane associating around the organic molecule.

10. The molecular wrapping method according to claim 9, wherein the wrapping step is a step of introducing the water-added mixed solution into water.

11. The molecular wrapping method according to claim 9 or 10, wherein at least part of the organic molecule contains a polar molecule.

12. The molecular wrapping method according to claim 9 or 10, wherein at least part of the organic molecule contains an ultraviolet absorbing molecule having an ultraviolet absorbing effect or a pigment molecule having a coloring property.

13. The molecular wrapping method according to claim 12, wherein the ultraviolet absorbing molecule is at least one selected from the group consisting of benzophenone series, benzotriazole series, benzoate series and triazine series.

14. The molecular wrapping method according to claim 12, wherein the pigment molecule is at least one selected from the group consisting of azo series, phthalocyanine series, quinacridone series, isoindolinone series, dioxazine series, benzimidazolone series, anthraquinon series, indanthrone series, perylene series and phenanthroline series.

15. The molecular wrapping method according to any one of claims 9 to 14, wherein the mixed solution preparing step is a step of further dissolving silicon alkoxide in the dehydrated solvent.

16. The molecular wrapping method according to claims 9 to 14, wherein the mixed solution preparing step is a step of preparing the mixed solution so that the molar ratio of titanium atoms to silicon atoms (Ti:Si) falls in the range of from 1:0.5 to 1:2.

17. The molecular wrapping method according to claim 9, wherein the wrapping step is a step of adding water to the mixed solution by dropping water diluted with an organic solvent into the mixed solution.

## Patentansprüche

1. Nanokompositteilchen, umfassend:
ein Kernteilchen, bei dem es sich um ein organisches Molekül oder ein Aggregat von organischen Molekülen handelt, und
eine Hüllschicht, die das Kernteilchen umhüllt und ein organisches Titanosilikat umfasst, das ein Si- und Ti-oxid umfasst, welches eine Bindung enthält, die durch M-O-M definiert ist, wobei M ein Silizium- oder Titanatom und O ein Sauerstoffatom ist, und das eine organische Gruppe aufweist, die an mindestens einen Teil der Siliziumatome gebunden ist.

2. Nanokompositteilchen nach Anspruch 1, bei dem mindestens ein Teil des organischen Moleküls ein polares Molekül enthält.

3. Nanokompositteilchen nach Anspruch 1, bei dem mindestens ein Teil des organischen Moleküls ein Ultraviolett-absorbierendes Molekül mit einem Ultraviolettabsorbierenden Effekt oder ein Pigmentmolekül mit einer Farbgebungseigenschaft enthält.

4. Nanokompositteilchen nach Anspruch 3, bei dem das Ultraviolett-absorbierende Molekül mindestens eines ist, das aus der Gruppe, bestehend aus der Benzophenon-Reihe, der Benzotriazol-Reihe, der Benzoat-Reihe und der Triazin-Reihe, ausgewählt ist.

5. Nanokompositteilchen nach Anspruch 3, bei dem das Pigmentmolekül mindestens eines ist, das aus der Gruppe, bestehend aus der Azo-Reihe, der Phthalocyanin-Reihe, der Chinacridon-Reihe, der Isoindolinon-Reihe, der Dioxazin-Reihe, der Benzimidazolon-Reihe, der Anthrachinon-Reihe, der Indanthron-Reihe, der Perylen-Reihe und der Phenanthrolin-Reihe, ausgewählt ist.

6. Nanokompositteilchen nach einem der Ansprüche 1 bis 5, bei dem die Hüllschicht mehr Titanatome auf einer Innenseite davon als auf einer Außenseite davon enthält.

7. Nanokompositteilchen nach einem der Ansprüche 1 bis 6, bei dem die organische Gruppe, welche die Hüllschicht bildet, an einem Ende davon eine Reaktionsgruppe aufweist, die mit einer organischen Gruppe, die eine weitere Hüllschicht bildet, reagieren und eine Bindung damit bilden kann.

8. Nanokompositteilchen nach einem der Ansprüche 1 bis 7, bei dem das organische Titanosilikat **dadurch** gebildet wird, dass mindestens ein Titanalkoxid und ein Organoalkoxysilan, das eine oder mehrere Alkoxygruppe(n) und ein Siliziumatom aufweist, das kovalent an die organische Gruppe gebunden ist, einer Hydrolyse und einer Dehydratisierungskondensation unterzogen werden.

9. Molekulares Einhüllungsverfahren zum Einhüllen eines organischen Moleküls oder eines Aggregats von organischen Molekülen mit einem organischen Titanosilikat, umfassend:
einen Mischlösung-Herstellungsschritt des Herstellens einer Mischlösung durch Lösen von mindestens einem Titanalkoxid, einem Organoalkoxysilan, das eine oder mehrere Alkoxygruppe(n) und ein Siliziumatom aufweist, das kovalent an die organische Gruppe gebunden ist, und einem organischen Molekül in einem wasserfreien Lösungsmittel, und
einen Einhüllungsschritt des Einhüllens des organischen Moleküls mit einem organischen Titanosilikat durch Zugeben von Wasser zu der Mischlösung, so dass das Titanalkoxid und das Organoalkoxysilan einer Hydrolyse und einer Dehydratisierungskondensation unterzogen werden, wobei das Titanalkoxid und das Organoalkoxysilan um das organische Molekül assoziierten.

10. Molekulares Einhüllungsverfahren nach Anspruch 9, bei dem der Einhüllungsschritt ein Schritt des Einbringens der mit Wasser versetzten Mischlösung in Wasser ist.

11. Molekulares Einhüllungsverfahren nach Anspruch 9 oder 10, bei dem mindestens ein Teil des organischen Moleküls ein polares Molekül enthält.

12. Molekulares Einhüllungsverfahren nach Anspruch 9 oder 10, bei dem mindestens ein Teil des organischen Moleküls ein Ultraviolett-absorbierendes Molekül mit einem Ultraviolettabsorbierenden Effekt oder ein Pigmentmolekül mit einer Farbgebungseigenschaft enthält.

13. Molekulares Einhüllungsverfahren nach Anspruch 12, bei dem das Ultraviolett-absorbierende Molekül mindestens eines ist, das aus der Gruppe, bestehend aus der Benzophenon-Reihe, der Benzotriazol-Reihe, der Benzoat-Reihe und der Triazin-Reihe, ausgewählt ist.

14. Molekulares Einhüllungsverfahren nach Anspruch 12, bei dem das Pigmentmolekül mindestens eines ist, das aus der Gruppe, bestehend aus der Azo-Reihe, der Phthalocyanin-Reihe, der Chinacridon-Reihe, der Isoindolinon-Reihe, der Dioxazin-Reihe, der Benzimidazo-Ion-Reihe, der Anthrachinon-Reihe, der Indanthron-Reihe, der Perylen-Reihe und der Phenanthrolin-Reihe, ausgewählt ist.

15. Molekulares Einhüllungsverfahren nach einem der Ansprüche 9 bis 14, bei dem der Mischlösung-Herstellungsschritt ein Schritt ist, bei dem ferner ein Siliziumalkoxid in dem wasserfreien Lösungsmittel gelöst wird.

16. Molekulares Einhüllungsverfahren nach einem der Ansprüche 9 bis 14, bei dem der Mischlösung-Herstellungsschritt ein Schritt ist, bei dem die Mischlösung derart hergestellt wird, dass das Molverhältnis von Titanatomen zu Siliziumatomen (Ti:Si) im Bereich von 1:0,5 bis 1:2 liegt.

17. Molekulares Einhüllungsverfahren nach Anspruch 9, bei dem der Einhüllungsschritt ein Schritt ist, bei dem der Mischlösung durch Tropfen von Wasser, das mit einem organischen Lösungsmittel verdünnt ist, in die Mischlösung Wasser zugesetzt wird.

## Revendications

1. Particule de nanocomposite comprenant :
une particule de noyau représentée par une molécule organique ou par un assemblage de molécules organiques ; et
une couche d'enveloppe enrobant la particule de noyau et comprenant du silicate de titane organique, qui comprend un oxyde de Si et de Ti contenant une liaison s'exprimant sous la forme M-O-M, dans laquelle M désigne un atome de silicium ou de titane et 0 représente un atome d'oxygène, et qui présente un groupement organique relié à au moins une partie des atomes de silicium.

2. Particule de nanocomposite selon la revendication 1, dans laquelle au moins une partie de la molécule organique contient une molécule polaire.

3. Particule de nanocomposite selon la revendication 1, dans laquelle au moins une partie de la molécule organique contient une molécule absorbant les ultraviolets, ayant pour effet l'absorption des ultraviolets, ou une molécule de pigment exerçant une propriété de coloration.

4. Particule de nanocomposite selon la revendication 3, dans laquelle la molécule absorbant les ultraviolets est au moins l'une des molécules choisies dans le groupe comprenant la série des benzophénones, la série des benzotriazoles, la série des benzoates et la série des triazines.

5. Particule de nanocomposite selon la revendication 3, dans laquelle la molécule de pigment est au moins l'une des molécules choisies dans le groupe constitué de la série des colorants azoïques, de la série des phtalocyanines, de la série des quinacridones, de la série des isoindolinones, de la série des dioxazines, de la série des benzimidazolones, de la série des anthraquinones, de la série des indanthrones, de la série des pérylènes et de la série des phénanthrolines.

6. Particule de nanocomposite selon l'une quelconque des revendications 1 à 5, dans laquelle la couche d'enveloppe contient davantage d'atomes de titane du côté interne de l'enveloppe que du côté externe de l'enveloppe.

7. Particule de nanocomposite selon l'une quelconque des revendications 1 à 6, dans laquelle le groupement organique constituant la couche d'enveloppe présente, à l'une de ses extrémités terminales, un groupement réactionnel qui peut réagir et former une liaison avec un groupement organique constitutif d'une autre couche d'enveloppe.

8. Particule de nanocomposite selon l'une quelconque des revendications 1 à 7, dans laquelle le silicate de titane organique est formé en ce que l'on soumet au moins un alcoxyde de titane et un organoalcoxysilane, présentant un ou plusieurs groupements alcoxy et possédant un atome de silicium relié de manière covalente au groupement organique, à une réaction d'hydrolyse et de déshydratation-condensation.

9. Procédé d'enrobage moléculaire permettant d'enrober une molécule organique ou un assemblage de molécules organiques avec un silicate de titane organique, comprenant :
une étape de préparation d'une solution mixte au cours de laquelle on prépare la solution mixte en dissolvant au moins un alcoxyde de titane, un organoalcoxysilane ayant un ou plusieurs groupements alcoxy et possédant un atome de silicium relié de manière covalente à un groupement organique, et une molécule organique, dans un solvant déshydraté ; et
une étape d'enrobage consistant à enrober la molécule organique avec du silicate de titane organique en ajoutant de l'eau à la solution mixte dans le but soumettre l'alcoxyde de titane et l'organoalcoxysilane à une réaction d'hydrolyse et de déshydratation-condensation, ce qui entraîne l'association de l'alcoxyde de titane et de l'organoalcoxysilane autour de la molécule organique.

10. Procédé d'enrobage moléculaire selon la revendication 9, dans lequel l'étape d'enrobage est une étape consistant à introduire la solution mixte additionnée d'eau dans de l'eau.

11. Procédé d'enrobage moléculaire selon la revendication 9 ou 10, dans lequel au moins une partie de la molécule organique contient une molécule polaire.

12. Procédé d'enrobage moléculaire selon la revendication 9 ou 10, dans lequel au moins une partie de la molécule organique contient une molécule absorbant les ultraviolets exerçant un effet d'absorption des ultraviolets ou une molécule de pigment ayant une propriété de coloration.

13. Procédé d'enrobage moléculaire selon la revendication 12, dans lequel la molécule absorbant les ultraviolets est au moins l'une des molécules choisies dans le groupe constitué de la série des benzophénones, de la série des benzotriazoles, de la série des benzoates et de la série des triazines.

14. Procédé d'enrobage moléculaire selon la revendication 12, dans lequel la molécule de pigment est au moins l'une des molécules choisies dans le groupe constitué de la série des colorants azoïques, de la série des phtalocyanines, de la série des quinacridones, de la série des isoindolinones, de la série des dioxazines, de la série des benzimidazolones, de la série des anthraquinones, de la série des indanthrones, de la série des pérylènes et de la série des phénanthrolines.

15. Procédé d'enrobage moléculaire selon l'une quelconque des revendications 9 à 14, dans lequel l'étape de préparation de la solution mixte est une étape qui consiste également à dissoudre un alcoxyde de silicium dans le solvant déshydraté.

16. Procédé d'enrobage moléculaire selon l'une quelconque des revendications 9 à 14, dans lequel l'étape de préparation de la solution mixte est une étape consistant à préparer la solution mixte de manière que le rapport molaire des atomes de titane aux atomes de silicium (Ti:Si) se situe dans la plage de 1:0,5 à 1:2.

17. Procédé d'enrobage moléculaire selon la revendication 9, dans lequel l'étape d'enrobage est une étape consistant à ajouter de l'eau à la solution mixte en procédant de manière à verser goutte à goutte une eau diluée avec un solvant organique dans la solution mixte.
